**Europäisches Patentamt**

**European Patent Office**

**Office européen des brevets**

(19)

(11) Veröffentlichungsnummer : **0 073 427 B2**

(12) # NEUE EUROPÄISCHE PATENTSCHRIFT

(45) Veröffentlichungstag der neuen Patentschrift :
**07.10.92 Patentblatt 92/41**

(51) Int. Cl.⁵ : **G03C 1/76,** G03C 1/85,
G03C 11/08, B29C 71/04

(21) Anmeldenummer : **82107608.0**

(22) Anmeldetag : **20.08.82**

(54) **Verfahren und Vorrichtung zur Vorbehandlung von polymeren Trägermaterialien.**

(30) Priorität : **01.09.81 DE 3134615**

(43) Veröffentlichungstag der Anmeldung :
**09.03.83 Patentblatt 83/10**

(45) Bekanntmachung des Hinweises auf die
Patenterteilung :
**05.11.86 Patentblatt 86/45**

(45) Bekanntmachung des Hinweises auf die
Entscheidung über den Einspruch :
**07.10.92 Patentblatt 92/41**

(84) Benannte Vertragsstaaten :
**BE CH DE FR GB IT LI**

(56) Entgegenhaltungen :
**DE-A- 1 923 724
DE-A- 1 954 284
DE-A- 2 816 856
DE-A- 2 816 859**

(56) Entgegenhaltungen :
**JP-A- 538 672
JP-A- 5 027 867
JP-A- 5 335 990
JP-A- 5 580 439
JP-A-52 112 410
US-A- 3 057 792
US-A- 3 573 916
US-A- 3 607 345
US-A- 3 702 258
Chem. Tech., 1971, S. 232-237**

(73) Patentinhaber : **Agfa-Gevaert AG
W-5090 Leverkusen 1 (DE)**

(72) Erfinder : **Dolezalek, Friedrich, Dr.
Ettaler Strasse 24
W-8031 Groebenzell (DE)**
Erfinder : **Koepke, Günther, Dr.
Zum Hahnenberg 41
W-5068 Odenthal (DE)**
Erfinder : **Rendelmann, Ulrich, Dipl.-Ing.
Walter-Flex-Strasse 14
W-5090 Leverkusen 1 (DE)**

EP 0 073 427 B2

**Beschreibung**

Die Erfindung betrifft ein Verfahren zur Vorbehandlung von polymeren Trägermaterialien zum Zweck der Haftungsverbesserung bei nachfolgender Beschichtung mit hydrophilen Schichten, bei dem das Trägermaterial einer Corona-Entladung ausgesetrt wird.

Bei der Herstellung fotografischer Materialien werden hydrophile Schichten auf polymere Kunststoffträgermaterialien aufgebracht, die entweder ganz aus Kunststoff bestehen oder bei denen Kunststoffolien auf einen Fotopapierträger aufgebracht sind, um zu verhindern, daß Flüssigkeiten in den Papierträger eindringen. Schichten, die hydrophil sind, wozu auch die fotografischen Silberhalogenid-Gelatine-Emulsionen gehören, haften jedoch nicht auf der hydrophoben Oberfläche von polymeren Kunststoffträgermaterialien.

Es ist bekannt, daß sich eine ausreichende Haftung einer hydrophilen Schicht an der aus einem Polymer bestehenden Oberfläche eines Trägermaterials erzielen läßt, wenn man die Oberfläche vor der Beschichtung mit fotografischen Emulsionen durch eine Behandlung mit einer starken Koronaentladung aktiviert. Dieses Verfahren zur Erzielung der erforderlichen Haftung zwischen der aufzutragenden fotografischen Emulsion und dem Schichtträger ist einfach durchführbar und läßt sich auch mit einer großen Geschwindigkeit bewerkstelligen. Es zeigt sich jedoch, daß das Verfahren einen erheblichen Nachteil besitzt. Die mit dem Verfahren hergestellten Filme oder Fotopapiere zeigen nach der Entwicklung eine Wolkigkeit des Bildes, die noch stärker in Erscheinung tritt, wenn der Schichtträger mit einem elektrisch leitenden Material (Antistatikum) versehen ist, um Aufladungen während der Herstellung und der Verarbeitung des fotografischen Materials zu vermeiden.

Aus der deutschen Auslegeschrift 1 923 724 (US-A 3 531 314) ist ein Verfahren zum Beschichten eines, eine Oberfläche aus einem Polymer besitzenden. Schichtträgers bekannt. bei dem nach der Aktivierung der Oberfläche mit Koronaentladungen auf beide Seiten der Bahn hohe gleichnamige Ladungen aufgebracht werden. Hiermit soll erreicht werden, daß die durch die Koronaentladungen entstehenden Potentialunterschiede der Oberflächenladungen in verschiedenen Bereichen der Oberfläche so weit reduziert werden, daß die Unregelmäßigkeiten im fenigen Produkt, insbesondere die sichtbaren Querlinien im fotgrafischen Aufzeichnungsmaterial geringer werden und völlig verschwinden, wenn die Potentialunterschiede einen unteren Grenzwert von etwa 100 Volt unterschreiten.

Mit dem Verfahren nach der US-A-3 531 314 können die Oberflächenladungsunterschiede durch eine hohe gleichnamige Aufladung zwar reduziert und auch ausgeglichen werden, jedoch verbleibt auf der Bahn die hohe Aufladung, die bei der Weiterverarbeitung in einer Beschichtungseinrichtung oder beim Aufwickeln der Bahn zu einer Rolle zu erheblichen Schwierigkeiten führen kann, zumal solcherart aufgeladene Bahnen in erheblichem Maße zur Entladung neigen oder Staub anziehen.

Aus der deutschen Offenlegungsschrift DE-A 1 954 284 (US-A-3 761 299) ist ein Verfahren zur Änderung der Oberflächenbenetzungs- und Haftungseigenschaften von polymeren Formkörpern bekannt, bei dem das Material durch eine Reaktionskammer geführt wird, das mit einem Edelgas oder einem anderen speziellen Gas gefülllt ist und in dem bei einem Druck vom 0,013 bis 26,0 mbar (0,01 bis 20 mm Hg) eine Gasentladung stattfindet, die durch außerhalb der Reaktionskammer angesetzte, an eine Spannungsquelle angeschlossene Elektroden bewirkt wird.

Hierbei wird das Material in einem elektromagnetischen Feld von mindestens 10 Megaherz (Radiofrequenzenergie) mit einem Gasstrom behandelt. Außer der dauernden Verbesserung der Wasserbenetzbarkeit führt diese Behandlung dazu, die Neigung hydrophober Polymerformkörper, statische Aufladungen zurückzubehalten, stark zu vermindern.

Das Verfahren hat aber den erheblichen Nachteil, daß es extrem unwirksam ist, wenn es bei Normaldrücken durchgeführt wird, da bei derartigen Drücken der Hauptteil der Radiofreguenzenergie in termische Energie umgewandelt wird. Es werden daher Drücke von 0,013 bis 26,0 mbar (0,01 bis 20 mm Hg) und bevorzugt Drücke von 0,13 bis 1,0 mbar (0,01 bis 0,8 mm Hg) angewendet.

Die kontinuierliche Durchführung eines derartigen Verfahrens unter Fein- bzw. Grobvakuumbedingungen bereitet aber einen erheblichen technischen Aufwand, da die beschriebene Behandlungskammer ohne Beschädigung des zu behandelnden Materiales nicht abzudichten ist und in erheblichem Maß Außenluft in die Kammer eintritt, wenn ein kontinuierlicher Verarbeitungsprozeß durchgeführt wird. Zur Beseitigung der leckluft und der Aufrechterhaltung der Gasatmosphäre in dem Vakuum der Behandlungseinrichtung ist ein großer Energieaufwand erforderlich und eine gleichmäßige Behandlung kaum möglich.

Außerdem muß die Reaktionskammer an einen Vorratsbehälter für das verwendete Gas angeschlossen sein, um der ständigen Verdünnung des Gases mit von außen eintretender leckluft entgegenzuwirken. Der ständige Verbrauch von Gas ist sehr kostspielig. JP 50/27 867 beschreibt ein Verfahren zur Herstellung von Polyolefinformkörpern mit guten Oberflächeneigenschaften, wobei der Polyolefinformkörper zunächst mit wenigstens einer Verbindung aus der Gruppe der Thiurame, Dithiocarbamate und Thiazole beaufschlagt und dann einer Koronaentladung in Gegenwart von Luft oder Gasen unter Atmosphärendruck oder erniedrigtem Druck ausgesetzt wird, wobei keine Angaben über den Unterdruckbereich und den Bereich der Behandlungsintensität der Koronaentladung gemacht werden.

Der Erfindung liegt die Aufgabe zugrunde, ein Verfahren der eingangs genannten Art zu schaffen, mit dem es auf einfache, rasche und wirtschaftliche Weise möglich ist, die Oberflächenbenetzungs- und Haftungseigenschaften von polymeren Trägermaterialien zum Auftrag hydrophiler Schichten zu verbessern, ohne daß nennenswerte elektrostatische Restladungen auf der Trägeroberfläche zurückbleiben, die zu einer schlechten Begußqualität führen.

Diese Aufgabe wird dadurch gelöst, daß das polymere Trägermaterial im Luft-zu-Luft-Betrieb bei einem Unterdruck, der 100 bis 900 mbar, vorzugsweise 500 bis 900 mbar unter dem Atmosphärendruck liegt, und einer Behandlungsintensität zwischen 50 und 1000 W.min/m² Trägermaterial der Koronaentladung ausgesetzt wird.

Überraschenderweise zeigte sich, daß eine Koronabehandlung von Trägermaterialien bereits bei einem geringen Unterdruck bessere Haft- und Benetzungseigenschatten zeigt als die bisher verwendete Koronabehandlung bei Normaldruck. Es war außerdem nicht zu erwarten, daß auf dem Trägermaterial nach dem Verlassen der Behandlungsstation keine nennenswerte elektrostatische Restladungen auftraten und sich das Trägermaterial mit fotografischen Silberhalogenid-Gelatine-Emulsionen ohne auftretende Flecken oder sonstige Fehler beschichten ließ. Die bisher aus dem Stand der Technik bekannten Plasmabehandlungen, wobei das zu behandelnde Gut in einen abgeschlossenen Raum verbracht wird, in dem eine Gasentladung aufrechterhalten wird, so daß das Gasentladungsplasma das Behandlungsgut direkt berührt, arbeiten bei Druckbereichen von 0,01 bis 20 mbar absolut. Dagegen ist gerade der Druckbereich oberhalb 100 mbar absolut technisch besonders interessant, denn hier ist der gerätetechnische Aufwand und der Energieaufwand zum Abpumpen der leckluft viel geringer, während die elektrostatischen Restladungen bereits deutlich herabgesetzt und die Haftungs- und Benetzungseigenschaften wesentlich verbessert sind.

Ein weiterer Vorteil des Verfahrens besteht darin, daß die nach dem erfindungsgemäßen Verfahren aktivierte Bahn sofort nach der Behandlung mit sehr empfindlichen Color-Silberhalogenid-Gelatine-Emulsionen begossen und das Trägermaterial in einem Arbeitsgang in einer Maschine kontinuierlich zu einem fertigen Colorfilm oder Colorpapier verarbeitet werden kann.

Wie Versuche zeigen, läßt sich das erfindungsgemäß mit Koronaentladungen im Unterdruckbereich behandelte Bahnmaterial überraschenderweise aber auch über einen längeren Zeitraum aufbewahren und dann erst mit fotografischen Color-Emulsionen begießen, ohne daß die Benetzungs- und Haftungseigenschaften unzureichend würden und sich die Qualität des Begusses durch Fleckenbildung verschlechtern würde. Die normale Aktivierung mit Koronaentladungen bei Normaldruck hatte bisher den Nachteil, daß die Aktivierung bereits nach Tagen nicht mehr ausreichte um ausreichende Haftung von Gelatineemulsionen auf dem Trägermaterial zu erzielen, während die erfindungsgemäß behandelten Trägermaterialien noch nach einem Jahr eine gut benetzbare Oberfläche besitzen.

Das Verfahren wird in vorteilhafter Weise so durchgeführt, daß die Koronaentladungseinrichtung mit einer Frequenz von 1 bis 150 kHz, vorzugsweise von 15 bis 40 kHz beaufschlagt wird. Netzfrequenz-Korona-Entladungen von 40 bis 60 Hz sind als besonders instabil bekannt und erfordern eine erheblich längere Behandlungszeit für nichtleitende Trägermaterialien als die stabilen Koronaentladungen im kHz-Bereich, die bereits bei sehr kurzen Behandlungszeiten gute Ergebnisse zeigen.

Das Verfahren der Erfindung kann beispielsweise in wirksame Weise auf Polyester, wie beispielsweise Polyethylenterephthalat, Polybutylenterephthalat; Polyolefine wie beispielsweise Polyethylen, Polypropylen; Polystyrole wie beispielsweise Polystyrol, Poly-$\alpha$-methylstyrol; Acrylester wie beispielsweise Polymethylmethacrylat; Porycarbonate; Cellulosederivate wie beispielsweise Cellulosetriacetat, Celluloseacetatbutyrat und dgl. angewendet werden.

Das erfindungsgemäße Verfahren ist besonders vorteilhaft, wenn es für ein mit diesen Polymeren beschichtetem Papier eingesetzt wird, wobei der Schichtträger ein elektrisch leitfähiges, antistatisch wirkendes Mittel enthält, das in den Papierschichtträger eingearbeitet oder auf die Oberfläche des Papiers aufgebracht und mit einer Polymerschicht der obengenannten Polymere beschichtet ist.

Das Verfahren erlaubt nicht nur Kosten- und Energieeinsparungen, indem die aktivierten Trägerfolien in einem Arbeitsgang mit selbst den gegen störende Effekte besonders empfindliche fotografischen Emulsionen, wie zum Beispiel Gelatine-Silberhalogenidemulsion mit Farbkupplern aufgetragen werden, sondern ist als kontinuierliches Verfahren extrem rasch und auf die gewünschte Maschinengeschwindigkeit der Begießanlagen von 70 bis 200 m/min anpaßbar und liefert ein homogenes Trägermaterial mit den Eigenschaften, die für einen sofortigen oder späteren Beguß mit Coloremulsionen zur Erstellung eines qualitativ hochwertigen Colorfilmes oder Colorpapieres gefordert werden. Die Anpassung an die Maschinengeschwindigkeit kann in einfacher Weise durch die Wahl der Strahlungsintensität und/oder durch die Wahl des Unterdruckes erfolgen.

Das Verfahren wird mit einer Vorrichtung durchgeführt, bei der entlang des Weges des kontinuierlich bewegten Trägermaterials ein Behandlungsraum mit mindestens einer Koronaentladungseinrichtung angeordnet ist und der Behandlungsraum unter Unterdruck steht und gegen den Atmosphärendruck abgedichtet ist wobei in einer vorteilhaften Ausführungsform der Vorrichtung der Behandlungsraum durch das Trägermaterial selbst, Sperrwalzen und Walzenabdichtungen gegen den Atmosphärendruck abgedichtet ist.

Diese relativ einfache Vorrichtung erlaubt es in überraschend einfacher Weise eine Behandlung von Polymeroberflächen mit Koronaentladung im Unterdruckbereich von 100 bis 400 mbar unter Atmosphärendurck durchzuführen und gute Ergebnisse zu erzielen.

In einer Weiterentwicklung werden vor den Behandlungsraum beidseitig, auf der Einlauf- und auf der Auslaufseite des Trägermateriales beidseitig abgedichtete Vorkammern angeordnet, in denen ein Unterdruck erzeugbar ist, der zwischen dem der Atmosphäre und dem des Behandlungsraumes liegt.

Durch die stufenweise Einführung des Trägermaterials in den Unterdruck des Behandlungsraumes wird das Problem der Walzenabdichtung reduziert und die erforderliche Pumpenarbeit verringert. Mit dieser Vorrichtung läßt sich ein Unterdruck in dem Behandlungsraum von 1000-400 mbar ohne wesentliche Unterdruckverluste aufrechterhalten, wobei in den Vorkammern ein Unterdruck von 600-500 mbar unterhalten wird. Werden weitere Vorkammern zur stufenweisen Unterdruckbildung vor den Behandlungsraum angeordnet, so läßt sich in dem Behandlungsraum ohne einen wesentlichen Energieverlust ein Unterdruck von 900 mbar erzeugen.

Ein weiterer Vorteil der Vorrichtung besteht darin daß der Energieverbrauch der Koronaeinrichtung im Unterdruck geringer ist als bei einer Koronaentladung bei Normaldruck und kein Ozon in den Raum austritt, sondern mit den Unterdruckpumpen abgesaugt und abgeführt wird. Da die Vorrichtung durch Abdichtungswalzen abgedichtet ist, kann kein durch die Koronaentladung erzeugtes Licht aus der Vorrichtung austreten, so daß die Vorrichtung direkt vor der Begußstelle zum Beguß des Trägermateriales mit lichtempfindlichen fotografischen Materialien angeordnet werden kann ohne Vorbelichtungen zu erzeugen.

Fig. 1 zeigt eine Vorrichtung zur Durchführung einer Koronabehandlung im Unterdruckbereich,

Fig. 2 die Abhängigkeit der Restladung (hier ausgedrückt in Volt) und des C/O-Wertes vom Unterdruck,

Fig. 3 die Abhängigkeit des C/O-Wertes und des Wasserrandwinkels (WW) von der Bestrahlungsintensität ($Wmin/m^2$,),

Fig. 4 die Restladung in Volt eines Trägermaterials, welches bei Normaldruck einer Koronabehandlung ausgesetzt war,

Fig. 5 die Restladung bei einem Unterdruck von 400 mbar,

Fig. 6 die Restladung bei einem Unterdruck von 800 mbar,

Fig. 7 das Zeitverhalten des C/O-Wertes eines unterdruckbehandelten Trägermaterials.

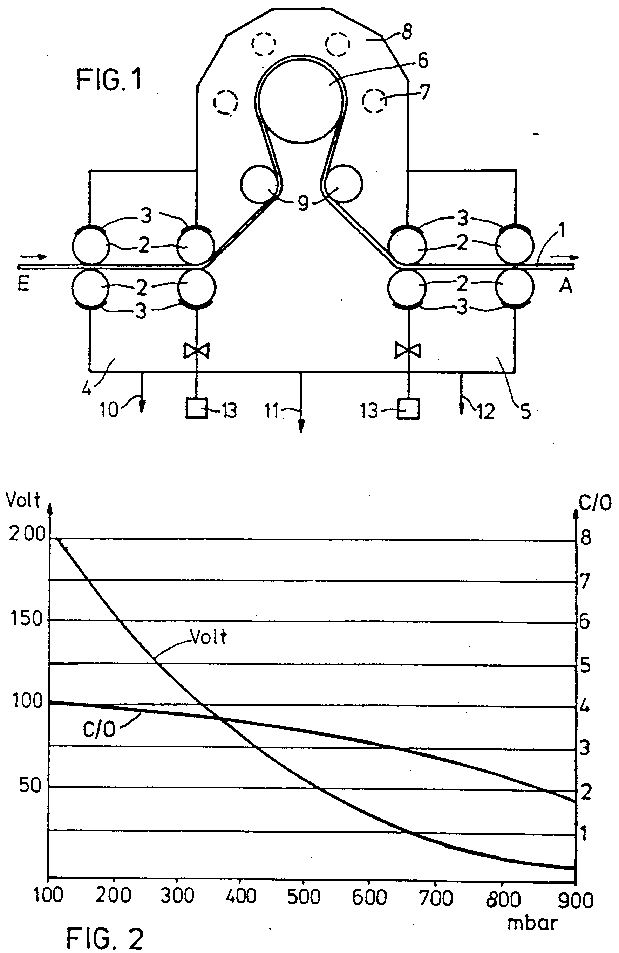

Fig. 1 zeigt eine Vorrichtung mit einem Behandlungsraum 8 zur kontinuierlichen Behandlung eines Trägermaterials 1 im Luft-zu-Luft-Betrieb mit Koronaentradungen im Unterdruck mit beidseitig angeordneten Vorkammern 4,5. Das Trägermaterial 1, zum Beispiel eine fotografische Filmbahn 1 aus einem Polymer mit einer Breite von 137 cm wird von einer Rolle abgewickelt und der Vorrichtung auf der Einlaufseite E zugeführt und von zwei Walzen 2 erfaßt. Die Walzen 2 sind gegen ihr Gehäuse, die Vorkammer 4, durch Dichtungen 3 abgedichtet. Zwischen den Walzen 2 bildet die Filmbahn 1 die Abdichtung. Die Vorkammer 4 ist an eine Unterdruckpumpe 10 angeschlossen, die die Vorkammer auf einem Unterdruck von beispielsweise 400 mbar unter Atmosphärendruck evakuiert. Von der Vorkammer 4 gelangt die Filmbahn 1 über weitere mit Dichtungen 3 abgedichtete Walzen 2 in den eigentlichen, unter stärkerem Unterdruck stehenden Behandlungsraum 8 und wird direkt oder über Umlenkwalzen 9 der Behandlungswalze 6 zugeführt. Um die Behandlungswalze 6 ist mindestens eine, oder sind wie in Fig. 1 dargestellt, mehrere Koronaentladungseinrichtungen 7 angeordnet. Als Koronaentladungseinrichtungen 7 können alle üblichen Elektroden, wie zum Beispiel Flachstahlelektroden, Walzenelektroden, Drahtelektroden, Quarzglaselektroden oder auch mit Aluminium-Granulat gefüllte Quarzglaselektroden verwendet werden. Die im Unterdruck mit Koronaentladung aktivierte und von elektrostatischen Aufladungen befreite Bahn 1 wird dann über die Umlenkwalze 9 und die Abdichtwalzen 2 aus dem Behandlungsraum 8 in die mit geringerem Unterdruck beaufschlagte Vorkammer 5 und von da über Walzen 2 zur Austrittsseite A der Vorrichtung gebracht. An der Austrittsseite A kann die Bahn 1 (Pfeil) direkt in eine Gießstation zur Beschichtung eingleitet oder aber einer Aufwickelvorrichtung zugeführt werden (nicht dargestellt). Der Unterdruck in den Vorkammern 4,5 und in dem Bearbeitungsraum 8 kann wie dargestellt (Pfeile) durch getrennte Unterdruckpumpen 10,11,12 aufrechterhalten und geregelt werden. Es ist aber auch möglich nur den Behandlungsraum 8 mit einer Unterdruckpumpe 11 geregelt auf dem gewünschten Unterdruck zu halten und den Unterdruck in den Vorkammern 4, 5 sich selbst einstellen zu lassen oder mit Stellgliedern 13 zu regeln.

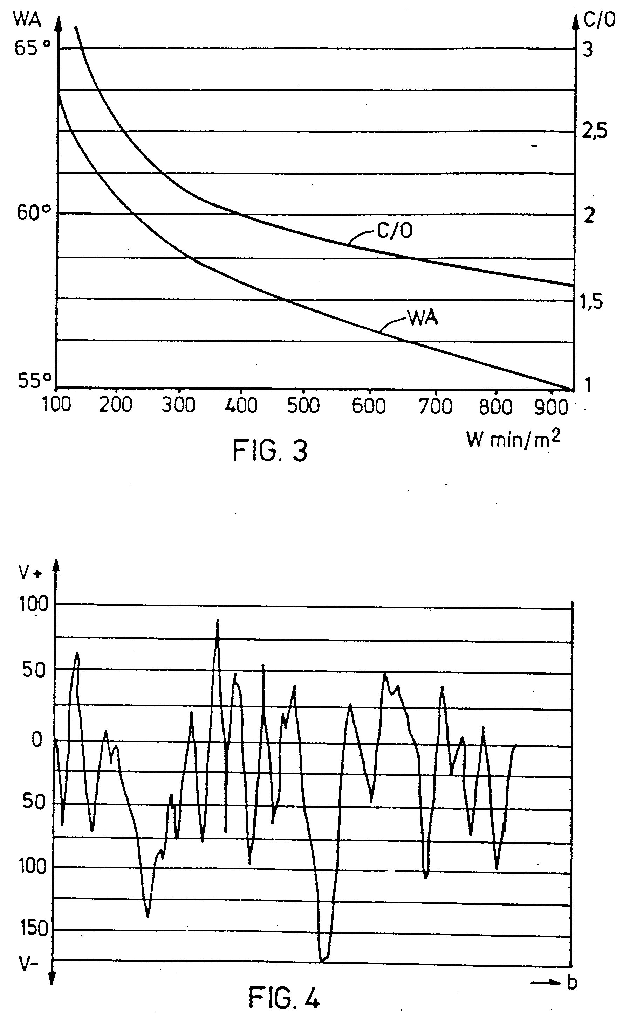

Wird ein Unterdruck von 600 mbar unter dem Normaldruck, in dem Behandlungsraum 8 gewünscht, so ist ein Unterdruck von etwa 400 mbar in den Vorkammern 4, 5 vorteilhaft. Wie in den später beschriebenen Beispielen gezeigt werden wird, ist die Oberflächenbenetzbarkeit und die Schichthaftung sowohl von der Intensität der Koronaentladung in $Wmin/m^2$ (Fig. 3) als auch vom Unterdruck im Behandlungsraum (Fig. 2) abhängig, wogegen die durch die Koronaentladung auf dem Trägermaterial verursachten und zu Beschichtungsfehlern führenden Aufladungen der Trägeroberfläche (Fig. 2) bereits bei einem Unterdruck von 100 mbar unter dem Normaldruck sichtbar abnehmen und bei 400 mbar Unterdruck keinen Einfluß mehr auf die Qualität des Begusses ausüben. Für höhere Unterdrücke, zum Beispiel 900 mbar, ist es aus vakuumtechnisch Gründen vorteilhaft jeweils eine weitere Unterdruck-Vorkammer vor die Vorkammern 4 und 5 vorzusetzen, so daß sich in den einzelnen Kammern Unterdruckstufen von 400, 600, 900, 600, 400 mbar ergeben. Die Leckverluste durch die Abdichtungen sind dann erheblich geringer als bei zu großen Druckstufen.

In Fig. 2 ist die Abhängigkeit der Differenz der größten positiven und negativen Aufladung der koronisierten Unterlage in Abhängigkeit vom Unterdruck in mbar unter dem Normaldruck als Kurve (Volt) aufgetragen. Wie die Kurve zeigt, liegt die Aufladungsdifferenz bei 100 mbar Unterdruck noch über 200 Volt ( + 100 Volt) und fällt dann steil ab, wobei bei einem Unterdruck von 800 mbar nur noch eine Potentialdifferenz von einigen Volt (+8, -10 Volt) verbleibt. Bei diesem Beispiel wurde die Koronaeinrichtung mit einer Spannung von 30 kV und einer Frequenz von 20 kHz beaufschlagt. Die Koronaentladung hatte eine Intensität von 130 Wmin/m$^2$ auf dem Trägermaterial. Für höhere Korona-Intensitäten liegt die Kurve etwa parallel, aber höher, und entsprechend für niedere Intensitäten niedriger. Eine gute Begußqualität bei den üblichen Color-Emulsionen mit Farbkupplern läßt sich bei einem Unterdruck von 400 mbar entsprechend einer Spannungsdifferenz von 80 Volt erreichen (Beispiel 2). Die Begußqualität wird weiter verbessert, indem zum Beispiel bei ernem Unterdruck von 800 mbar unter Nornaldruck behandelt wird (Beispiel 3).

Die zweite Kurve in Fig. 2 zeigt den C/O-Wert, das heißt das Kohlenstoff-Sauerstoffverhältnis auf der polymeren Oberfläche des Trägermaterials nach der Koronabehandlung, gemessen mit einem ESCA-Spektrometer (electron spectroscopy for chemical anaysis). Der C/0-Wert ist ein sehr zuverlässiges Hilfsmittel, um ohne jegliche Beschichtungsverluste eine Aussage über die Benetzbarkeit und das Schichthaften einer Gelatine-Emulsion auf einer polymeren Oberfläche zu erhalten. Das Meßverfahren ist in dem Journal de chimie physique (1978, 75, No 6, Seiten 662 - 668) beschrieben und liefert sehr schnell zuverlässige und genaue Werte, die sicherer sind als die bisher verwendete bekannte Wasserrandwinkelbestimmung (WW), wobei die Benetzbarkeit durch den Randwinkel eines auf die aktivierte Oberfläche gebrachten Wassertropfens beurteilt wird. In Fig. 3 ist für ein Beispiel die Kurve des C/O-Wertes (C/O) und die des Wasserrandwinkels (WW) in Abhängigkeit von der Intensität der Koronaentladung (Wmin/m$^2$) bei Normaldruck aufgetragen. Die Erfahrung zeigt, daß Oberflächen, die einen Wasserrandwinkel größer als 65°, entsprechend einem C/O-Wert größer als 4 besitzen, eine schlechte Benetzbarkeit und Schichthaftung zeigen. Der in Fig. 2 dargestellte C/O-Wert ist in Abhängigkeit vom Unterdruck (mbar) aufgetragen. Mit steigendem Unterdruck wird das Verhältnis von Kohlenstoff zu Sauerstoff auf der polymeren Oberfläche, der C/O-Wert, bei gleicher Koronaintensität in Wmin/m$^2$ geringer und hiermit die Benetzungseigenschaften der Oberfläche besser. Bereits bei einem Unterdruck von ca. 100 mbar unter Normaldruck wird der C/O-Wert von 4 unterschritten, so daß für eine gute Benetzbarkeit und ein gutes Schichthaften garantiert werden kann. Für die Qualität des Begusses bezüglich Flecken, Wolkigkeit und Schleier ist die Spannungsdifferenz auf der aktivierten Oberfläche verantwortlich, die bei 100 mbar Unterdruck mit 200 Volt noch im kritischen Bereich liegt und zu Begußfehlern führt, so daß mit einem größeren Unterdruck aktiviert werden muß.

Die Vorteile des Verfahrens und der Vorrichtung sollen im folgenden an drei Beispielen erläutert werden, wobei das Beispiel 1 eine übliche Koronabehandlung bei Normaldruck und die Beispiele 2 und 3 das erfindungsgemäße Verfahren mit einer Koronabehandlung bei Unterdruck behandeln.

**Beispiel 1**

Eine polyethylenbeschichtete Fotopapierbahn, die im Inneren mit einer Antistatikschicht versehen war, wurde bei normalem Druck (0 mbar Unterdruck) mittels Koronaentladungen aktiviert und direkt anschließend mit einer Gelatine-Silberhalogenid-Emulsion mit einem blaugrünen Farbkuppler begossen und geprüft. Die Behandlung und der Beguß erfolgten unter folgenden Bedingungen:

Bahngeschwindigkeit C = 110 m/min

Koronabehandlung mit 3 Quarzglaselektroden mit Aluminiumgranulat gefüllt.

Spannung 30 kV

Frequenz 20 kHz

Intensität der Behandlung 217 W.min/m$^2$

Die von der Koronaentladung erzeugte oder belassene Restladung auf der Bahnoberfläche wurde mit einer Influenz-Sonde (Typ 244, Firma Monroe Electronics Inc, 100 Housel Avenue, Lyndonville, New York 140 98) an einer Bahnprobe mit der Breite b gemessen und als Kurve aufgetragen (siehe Fig. 4). Die Kurve zeigt starke Ladungsschwankungen nach positiven und negativen Aufladungen, wobei die größeren negativen Aufladungen maximal -175 Volt und die kleineren positiven Restladungen + 88 Volt betrugen. Die für die Gußqualität verantwortliche Ladungsdifferenz von 263 Volt war erheblich zu hoch.

Die mit der Emulsion beschichteten und fotografisch entwickelten Proben zeigten eine Blaugrünschicht, die mit fleckenartigen hellen und dunklen Stellen belastet und für eine hochwertige Fotopapierqualität nicht geeignet waren.

Die aus Bahnproben in bekannter Weise hergestellten elektrostatischen Tonerbilder zeigten eine grobe Struktur, die auf dicht nebeneinanderliegende Stellen.mit großem Ladungsunterschied schließen ließ, was sich auch in der Kurve der Fig. 4 zeigt.

Der C/O-Wert wurde wie oben beschrieben gemessen und betrug 3,8 bis 4. Daß Schichthaften und die Benetzbarkeit waren dementsprechend gut.

**Beispiel 2**

Eine gleiche Fotopapierbahn wurde in gleicher Weise wie in Beispiel 1 behandelt, wobei die Behandlung jedoch im Unterdruck von 400 mbar unter dem Normaldtuck erfolgte. (C = 110 m/min, V = 30 kV, f = 20 kHz, 3 gleiche Elektroden).

Da die Koronaentladung im Unterdruck wesentlich intensiver wirkt als im Normaldruck, wurde die Behandlungsintensivität auf 130 W.min/m$^2$ eingestellt.

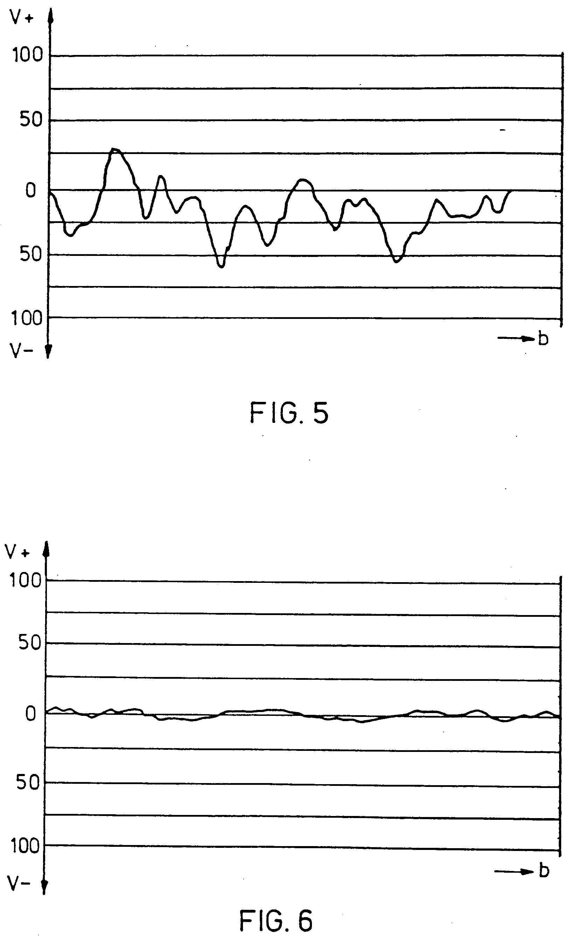

Die gemessene Restladung auf der Bahnoberfläche war erheblich reduziert und betrug max -55 Volt und + 26 Volt, so daß die Ladungsdifferenz 81 Volt betrug (siehe Fig. 5). Das Tonerbild zeigte nur eine leichte Struktur.

Die entwickelten Proben waren fleckenfrei und hatten keine sonstigen Fehler. Der gemessene C/O-wert betrug 3,5. Es wurde ein sehr gutes Trocken- und Naßschichthaften auf der Unterlage festgestellt.

**Beispiel 3**

Eine gleiche Fotopapierbahn wurde wie in Beispiel 2 behandelt, wobei der Unterdruck auf 800 mbar vergrößert wurde (240 mbar absolut). Die Koronabehandlungsintensität wurde weiter auf 85 W.min/m$^2$ reduziert.

Die gemessenen Restladungen zeigten eine geglättete Kurve über die Bahnbreite (b) wie aus der Fig. 6 zu ersehen ist. Die Restladungen betrugen +8 Volt und -10 Volt, so daß sich eine Ladungsdifferenz von maximal 18 Volt ergab. Die entwickelten Proben zeigten eine sehr gute Begußqualität. Das Tonerbild war sehr gleichmäßig und zeigte nur eine leichte Wolkigkeit. Der gemessene C/O-Wert betrug 2,4 und bestätigte das bereits festgestellte ausgezeichnete Schichthaften.

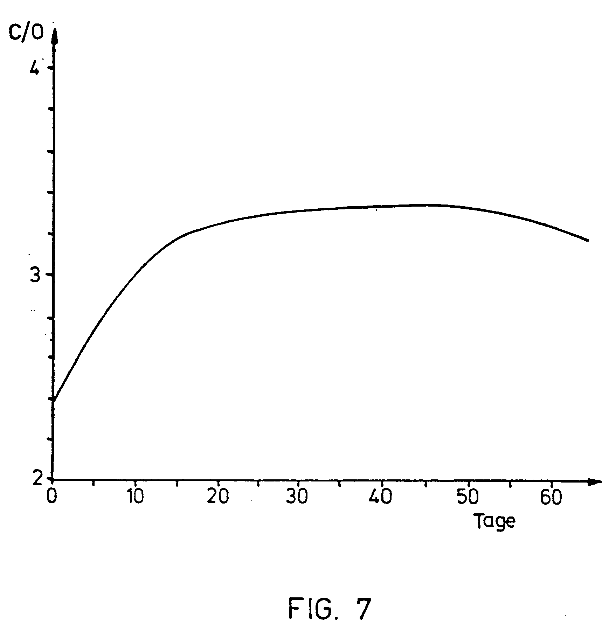

Eine nach dem Beispiel 3 gefertigte Bahn wurde nach der Behandlung nicht begossen, sondern zu eine Rolle aufgewickelt, um die Änderung des C/O-Wertes in Abhängigkeit von der Lagerzeit in Tagen zu ersehen. Von der Bahn wurden in regelmäßigen Zeitabständen Proben entnommen und der C/O-Wert gemessen. Die überraschendan Ergebnisse sind in Fig. 7 dargestellt. Hiernach steigt der C/O-Wert in den ersten 10 Tagen linear an und erreicht von einem Ausgangswert von 2,4 einen Wert von 3,1. Alsdann aber stellt sich ein etwa konstanter C/O-Wert ein, der bei 3,3 liegt und sich nach 50 Tagen wieder zu senken beginnt. Dieses Verhalten ist physikalisch nicht zu erklären, zeigt aber zumindest, daß keine wachsende Tendenz festgestellt werden kann. Diese Vermutung wurde an einer nach einem Jahr gemessenen Probe, die immer noch einen C/O-Wert von 3,2 hatte, bestätigt. Das erfindungsgemäße Verfahren der Koronaaktivierung bei Unterdruck erlaubt daher auch die Aufbewahrung einer aktivierten Bahn über einen langen Zeitraum, ohne daß sich ihre Benetzbarkeit wesentlich ändert, während nach dem konventionellen Verfahren bei Normaldruck die Bahnen bereits nach einigen Tagen eine schlechte Benetzbarkeit aufweisen und erneut aktiviert werden müssen.

**Patentansprüche**

1. Verfahren zur Vorbehandlung von polymeren Trägermaterialien zum Zweck der Haftungsverbesserung bei nachfolgender Beschichtung mit hydrophilen Schichten, bei dem das Trägermaterial einer Corona-Entladung ausgesetzt wird, dadurch gekennzeichnet, daß das polymere Trägermaterial im Luft-zu-Luft-Betrieb bei einem Unterdruck, der 100 bis 900 mbar unter dem Atmosphärendruck liegt, und einer Behandlungsintensität zwischen 50 und 1000 W.min pro m$^2$ Trägermaterial der Koronaentladung ausgesetzt wird.

2. Verfahren nach Anspruch 1, dadurch gekennzeichnet, daß die Koronaentladung bei einem Unterdruck, der 500 bis 900 mbar unter dem Atmosphärendruck liegt, durchgeführt wird.

3. Verfahren nach Anspruch 1 und 2, dadurch gekennzeichnet, daß die für die Koronaentladung gewählte Frequenz zwischen 1 und 150 kHz, vorzugsweise 15 bis 40 kHz beträgt.

## Claims

1. Process for the pretreatment of polymeric substrates for the purpose of improving adhesion during subsequent coating with hydrophilic layers, in which the substrate is exposed to a corona discharge, characterized in that the polymeric substrate is exposed to the corona discharge in air-to-air operation at a low pressure, which is 100 to 900 mbar below atmospheric pressure, and with a treatment intensity of between 50 and 1000 W.min per $m^2$ of substrate.

2. Process according to claim 1, characterized in that the corona discharge is carried out at a low pressure which is 500 to 900 mbar below atmospheric pressure.

3. Process according to claim 1 and 2, characterized in that the frequency selected for the corona discharge is between 1 and 150 kHz, preferably 15 to 40 kHz.

## Revendications

1. Procédé pour le traitement préalable de matières supports polymères dans le but d'améliorer l'adhérence lors de l'enduction ultérieure au moyen de couches hydrophiles, procédé dans lequel la matière support est exposée à une décharge en effet de couronne (décharge corona), caractérisé en ce que la matière support polymère est exposée à la décharge en effet de couronne en fonctionnement air-air sous une dépression qui se situe entre 100 et 900 mbar sous la pression atmosphérique avec une intensité du traitement comprise entre 50 et 1 000 W. min/m2 de matière support.

2. Procédé selon la revendication 1, caractérisée en ce que la décharge en effet de couronne est effectuée sous une dépression de 500 à 900 mbar sous la pression atmosphérique.

3. Procédé selon les revendications 1 et 2, caractérisée en ce que la fréquence choisie pour la décharge en effet de couronne est comprise entre 1 et 150 kHz, étant de préférence égale à 15 à 40 kHz.

FIG.1

FIG. 2

FIG. 3

FIG. 4

FIG. 5

FIG. 6

FIG. 7